# EUROPÄISCHE PATENTANMELDUNG

(11) **EP 0 872 382 A2**
(43) Veröffentlichungstag der Anmeldung: **21.10.1998**
(21) Anmeldenummer: 98101112.5
(22) Anmeldetag: 23.01.1998
(51) Int. Cl.: B60R 11/02

(54) **Vorrichtung zur Befestigung eines Gerätes, insbesondere eines Funkgerätes, an einem Halterahmen**

(30) Priorität: 27.03.1997 DE 19712994
(71) Anmelder: MOTOROLA, INC., Schaumburg, IL 60196 (US)
(72) Erfinder: Sangkuhl, Wolfgang, 14197 Berlin (DE)
(74) Vertreter: Richardt, Markus Albert

(57) **Zusammenfassung**

Um bei einer Vorrichtung zur Befestigung eines Gerätes (1), insbesondere eines Funkgerätes, an einem Halterahmen (8), wobei das Gerät (1) mit wenigstens einem von einer Seitenwand (17) des Gerätes (1) abstehenden Zapfen (3) an einem senkrecht zur Achse des wenigstens einen Zapfens (3) verlaufenden Schenkel (2) des Halterahmens (8) festlegbar ist, das Funkgerät auch ohne Schrauben sicher an dem Rahmen festlegen zu können, wird vorgeschlagen, daß wenigstens ein an dem Schenkel (2) des Halterahmens (8) drehbar gelagertes Klemmstück (4) vorgesehen ist, dessen Drehachse parallel zur Achse des Zapfens (3) verläuft, wobei das Klemmstück aus einer ersten Position, in der das Gerät in den Halterahmen (8) einsetzbar ist, in eine zweite Position drehbar ist, in der der wenigstens eine Zapfen (3) von Schenkel (2) und Klemmstück (4) zagenartig umschlossen und dabei kraftschlüssig festgelegt wird und wobei das Klemmstück (4) in der zweiten Position federelastisch unter Vorspannung an dem Schenkel (2) arretierbar ist.

## Beschreibung

### Stand der Technik

Die Erfindung betrifft eine Vorrichtung zur Befestigung eines Gerätes, insbesondere eines Funkgerätes, an einem Halterahmen mit den im Oberbegriff des Anspruchs 1 angegebenen Merkmalen.

Es ist bereits bekannt, Funkgeräte über Schrauben an einem in einem Kraftfahrzeug angebrachten Halterahmen zu befestigen. Bei einer derartigen Befestigungsvorrichtung ist als nachteilig anzusehen, daß das Funkgerät nicht ohne Werkzeuge in den Halterahmen ein- und wieder ausgebaut werden kann. Ein schnelles und einfaches Einstecken oder Entnehmen des Funkgerätes wird dadurch erschwert.

Aus der DE 33 11 671 A1 ist eine Lagerung für ein Funkgerät an einem Gehäuseteil bekannt, bei der das Funkgerät mit zwei von den Seitenwänden des Chassis abstehenden Zapfen in zwei an dem Gehäuseteil vorgesehene Schenkel eingehängt wird. In den parallel zueinander verlaufenden Schenkeln sind einseitig offene Langlöcher vorgesehen, in welche die Zapfen beim Einhängen eingreifen. Die Zapfen bilden eine Schwenkachse für das Funkgerät.

### Vorteile der Erfindung

Die erfindungsgemäße Vorrichtung zur Befestigung eines Gerätes an einem Halterahmen hat den Vorteil, daß das Gerät ohne schraubbare Verbindungsmittel sicher und spielfrei am Halterahmen mit wenigen Handgriffen befestigt werden kann. Der Ein- und Ausbau des Gerätes wird insgesamt durch die leichte Handhabbarkeit der Vorrichtung stark erleichtert. Besonders vorteilhaft ist, daß das Klemmstück ohne Schrauben einfach federelastisch an dem Schenkel befestigt wird. Zusätzliche Werkzeuge zur Befestigung des Gerätes werden nicht benötigt. Weiterhin werden Fertigungstoleranzen durch die federelastische Befestigung des Klemmstücks an dem Halterahmen vorteilhaft ausgeglichen. Durch die kraftschlüssige Befestigung des von dem Klemmstück und dem Schenkel zangenartig umgriffenen Zapfens an dem Halterahmen wird darüber hinaus erreicht, daß der Halterahmen durch das eingesetzte Gerät stabilisiert wird.

Weitere vorteilhafte Ausgestaltungen und Weiterbildungen der Erfindung werden durch die in den Unteransprüchen beschriebenen Merkmale ermöglicht. So wird ein Verrutschen des Zapfens in radialer Richtung bei starken auf das Gerät einwirkenden Kräften zusätzlich dadurch vermieden, daß das Klemmstück einen Ausschnitt mit einer den Umfang des Zapfens teilweise umgreifenden Kontur aufweist.

Besonders vorteilhaft ist, in dem Zapfen eine Taille vorzusehen, in die ein senkrecht zur Achse des Zapfens verlaufender Steg des Klemmstücks beim Anpressen derart eingreift, daß der Zapfen mit den Flanken der Taille an den Seitenflächen des Stegs entlanggleitet und dadurch beim Anpressen automatisch in axialer Richtung ausgerichtet wird. Durch diese Maßnahme wird ein Verrutschen des Zapfens in axialer Richtung vermieden. Die axiale Ausrichtung und Festlegung des Zapfens kann noch dadurch verbessert werden, daß der Zapfen zylindersymmetrisch mit einem von zwei kegelstumpfförmigen Flanken begrenzten Mittelstück ausgebildet wird und der in die Taille eingreifende Steg mit zwei als Fangflächen dienenden, schrägen Seitenflächen versehen wird, die sich beim Anpressen des Klemmstücks an die kegelstumpfförmigen Flanken anlegen.

Besonders stabil ist eine Befestigung des Gerätes über zwei, von gegenüberliegenden Seitenwänden des Gerätegehäuses abstehenden Zapfen an zwei parallel zueinander verlaufenden Schenkeln des Halterahmens.

Dadurch, daß in dem zur Befestigung des Zapfens vorgesehenen Schenkel des Halterahmens ein einseitig offenes Langloch zur Aufnahme des Zapfens vorgesehen ist, wird erreicht, daß das Gerät auch in einen an der Dachkonstruktion eines Fahrzeuges befestigten Halterahmen zunächst eingeschoben und dann mit den Klemmstücken festgelegt werden kann. Bei der Montage des Gerätes muß das Gerät dann nicht vom Monteur festgehalten werden, bis die Klemmstücke an dem Rahmen befestigt sind.

Die Ausbildung des wenigstens einen Klemmstücks als ein aus Kunststoff gefertigtes Formteil mit zwei durch einen Spalt getrennten, parallelen Seitenteilen, die über einen gemeinsamen Verbindungssteg elastisch federnd verbunden sind, ermöglicht es, das Klemmstück auf einfache Weise ohne Schrauben oder Nieten klammerartig auf den Schenkel derart aufzusetzen, daß ein Endabschnitt des Schenkels des Halterahmens beim Drehen des Klemmstücks in den Spalt eingreift. Dadurch liegt das Klemmstück beim Drehen fest an dem Schenkel an und kann spielfrei gedreht werden. Ein Drehgelenk für das Klemmstück wird vorteilhaft dadurch gebildet, daß ein in dem Spalt des Klemmstücks vorgesehener zylinderförmiger Vorsprung in ein Rundloch des Schenkels eingreift.

Vorteilhaft ist es, das Klemmstück über einen mit Rastmitteln versehenen Federbügel unter Vorspannung an dem Schenkel des Halterahmens zu befestigen. Bei einer Drehung des Klemmstücks in eine Position, in welcher der Zapfen gegen Klemmstück und Schenkel gepreßt wird, schnappt eine an dem Schenkel vorgesehene Rastnase in eine Ausnehmung des Federbügels ein, wodurch das Klemmstück auf einfache Weise, ohne zusätzliche Werkzeuge an dem Schenkel festgelegt wird.

Vorteilhaft kann der Federbügel L-förmig ausgestaltet sein, mit einem ersten, zur Befestigung an dem Klemmstück vorgesehenen Schenkel und einem zweiten, als Federarm vorgesehenen Schenkel, der an einer Frontseite des Klemmstücks anliegt und in Verlängerung der Frontseite von der gegen den Zapfen gepreßten Unterseite des Klemmstücks absteht.

### Zeichnung

Ein Ausführungsbeispiel der Erfindung ist in der Zeichnung dargestellt und wird in der nachfolgenden Beschreibung näher erläutert. Es zeigt
Fig. 1 eine Seitenansicht eines Schenkels des Halterahmens mit dem Klemmstück in einer ersten Drehposition des Klemmstückes, in der das Gerät in den Rahmen eingeschoben wird,
Fig. 2 eine Seitenansicht des Schenkels mit dem Klemmstück aus Fig. 1 in einer zweiten Drehposition, in welcher der Zapfen kraftschlüssig an dem Schenkel festgelegt wird,
Fig. 3. einen Querschnitt durch das Klemmstück und den Zapfen aus Fig. 2 entlang der in Fig. 4 gezeigten Linie A,
Fig. 4. eine Draufsicht auf das Klemmstück aus Fig. 2 ohne den Schenkel des Halterahmens bei abgenommenem Federbügel,
Fig. 5 eine perspektivische Ansicht eines U-förmigen Halterahmens mit zwei Klemmstücken und einem an dem Halterahmen zu befestigenden Funkgerät und
Fig. 6 ein zweites Ausführungsbeispiel der Vorrichtung, bei dem im Unterschied zu dem in Fig. 1 gezeigten Beispiel kein Langloch in dem Schenkel vorgesehen ist.

### Beschreibung der Ausführungsbeispiele

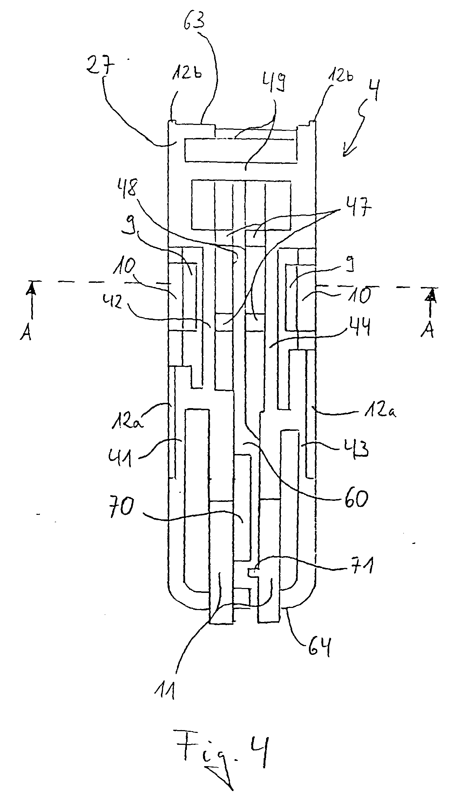

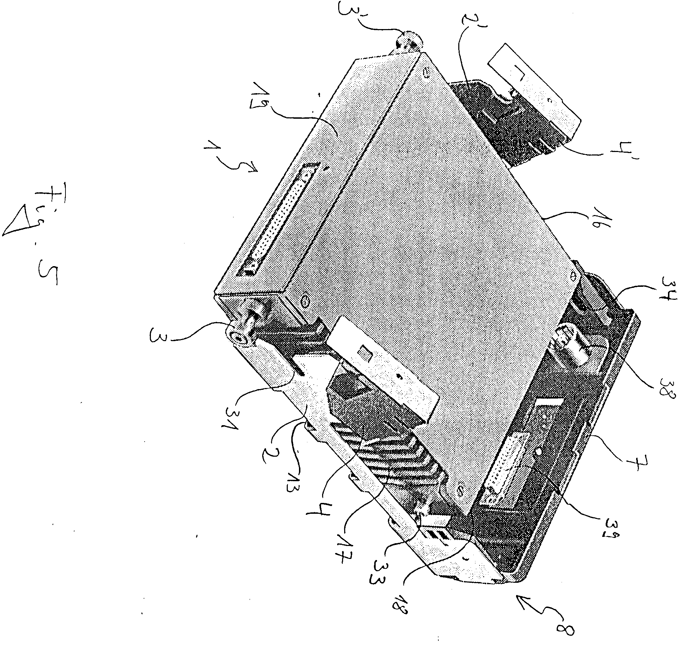

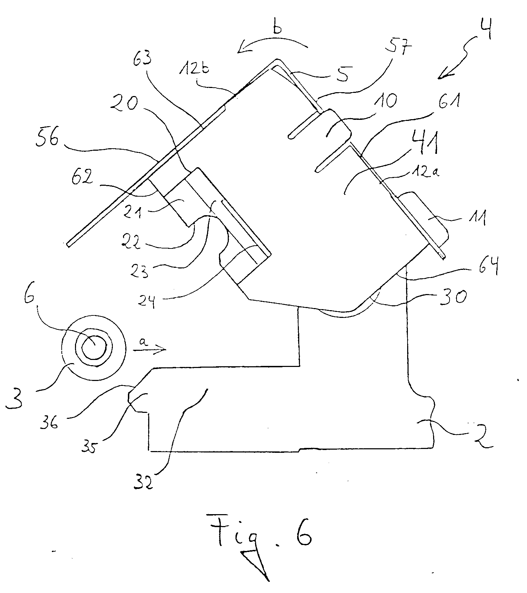

In Fig. 5 ist ein U-förmiger Halterahmen 8 für ein Funkgerät 1 dargestellt, der beispielsweise im Kofferraum eines Kraftfahrzeugs hängend oder liegend befestigt werden kann. Der Halterahmen kann auch zur Befestigung eines beliebigen anderen Gerätes, wie z.B. eines CD-Spielers, eines Kassettenrecorders, eines CD-Wechslers oder eines Radiogerätes verwandt werden. Der in Fig. 5 gezeigte Halterahmen ist aus Metallblech geformt und umfaßt eine rechteckige Rückwand 7 mit zwei parallel zueinander verlaufenden, an gegenüberliegenden Enden senkrecht von der Rückwand 7 abstehenden Schenkeln 2 und 2'. Die Form des Halterahmens 8 kann auch anders als in Fig. 5 ausgestaltet sein. So ist es beispielsweise möglich, eine rechteckige Rückwand mit vier davon anstehenden Schenkeln oder aber einen Halterahmen mit nur einem Befestigungsschenkel vorzusehen. Auch ist denkbar, das Gerät 1 mit verschiedenen Haltebolzen und nur einem Zapfen zu versehen, der mit einem Klemmstück an einem Halterahmen festgelegt wird.

Das in Fig. 5 gezeigte Funkgerät 1 umfaßt ein quaderförmiges Gehäuse mit einer Frontseite 19, einer Rückseite 18, zwei schmalen Seitenwänden 16 und 17 sowie einem Geräteboden und einem Deckel. Das Funkgerät 1 wird mit dem Halterahmen zugewandter Rückseite 18 zwischen den beiden Schenkeln 2 und 2' eingeschoben, bis die Rückseite 18 des Funkgerätes an die Rückwand 7 des Halterahmens anstößt. In Fig. 5 ist eine Befestigung des Gerätes 1 in liegender Position vorgesehen.

Bei einer Drehung des Halterahmens um 180° kann derselbe Rahmen aber auch zu einer hängenden Befestigung des Gerätes verwandt werden. Weiterhin sind in der Rückwand 7 des Halterahmens 8 Steckerteile 38 und 39 vorgesehen, welche mit in der Rückseite 18 des Gerätes 1 vorgesehenen Gegensteckern beim Einschieben des Gerätes automatisch in Eingriff gebracht werden. Um das Einschieben des Gerätes zu erleichtern, ist eine mit den Unterseiten der Schenkel 2 und 2' verbundene Bodenplatte 13 vorgesehen. An Stelle der Bodenplatte 13 können auch mehrere die Schenkel 2 und 2' an den Unterseiten verbindende Schienen vorgesehen sein. Die Bodenplatte kann aber auch ganz weggelassen werden, wenn das Gerät während der Montage vom Monteur festgehalten wird, bis es an den Schenkeln 2 und 2' befestigt ist.

Beim Einschieben des Gerätes 1 in den Halterahmen 8 gleiten die Seitenwände 17 und 16 parallel an den Schenkeln 2 und 2' des Halterahmens entlang. Die Seitenwand 17 weist an ihrem der Frontseite 19 des Gerätes zugewandten Ende einen senkrecht davon abstehenden Zapfen 3 und an ihrem der Rückseite 18 zugewandten Ende einen Bolzen 33 auf. Die gegenüberliegende Seitenwand 16 weist entsprechend einen Zapfen 3' und einen weiteren, in Fig. 5 nicht erkennbaren Bolzen im rückseitigen Bereich des Gerätes 1 auf. Kurz bevor die in der Rückseite 18 des Gerätes 1 vorgesehenen Steckerteile in die Steckerteile 38 und 39 beim Einschieben eingreifen, werden die Bolzen 33 in Nuten 34 eingeschoben, die in dem der Rückwand 7 zugewandten Bereich der Schenkel 2 und 2' vorgesehen sind. Die Zapfen 3 und 3' greifen etwa gleichzeitig in einseitig offene Langlöcher 31 ein, die an den von der Rückwand 7 des Halterahmens 8 abgewandten Enden der Schenkel 2 und 2' vorgesehen sind. Das Funkgerät 1 wird nun durch die Nuten 34 und die Langlöcher 31 sowie die Steckerteile gehalten, so daß der Monteur beide Hände frei hat, um das Gerät 1 an dem Halterahmen 8 mittels der Klemmstücke 4 und 4' festzulegen.

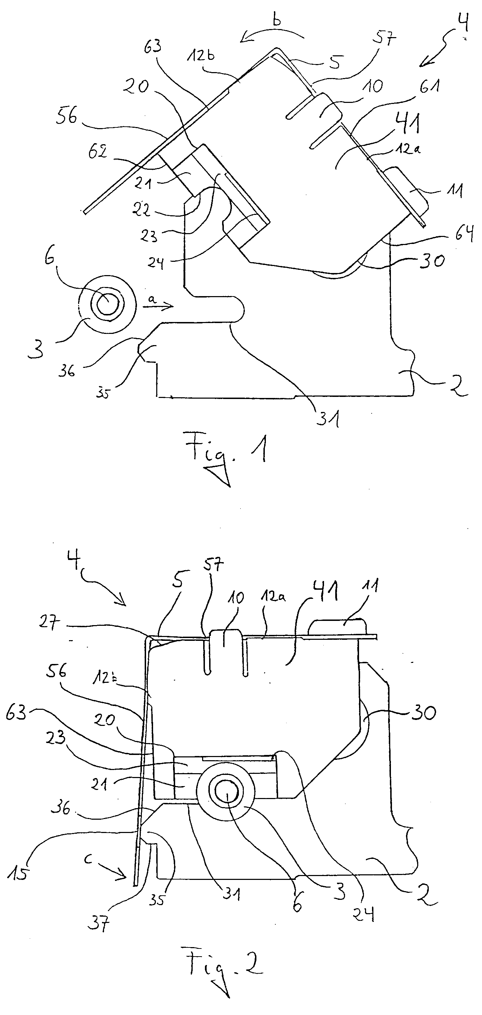

Dies gilt sowohl für eine liegende als auch für eine hängende Befestigung des Gerätes 1. Wird das Gerät insbesondere bei hängender Befestigung an dem Halterahmen 8 während der Montage vom Monteur festgehalten, so kann auf die Langlöcher 31, wie in Fig. 6 gezeigt, verzichtet werden. Das Gerät 1 wird dann einfach mit den Zapfen 3 und 3' auf einen Endabschnitt 32 der Schenkel 2 und 2' aufgesetzt und anschließend mit den Klemmstücke 4 und 4' an dem Halterahmen 8 befestigt. Auch auf die Bolzen 33 kann verzichtet werden, falls das Funkgerät im rückseitigen Bereich durch die Stecker 38 und 39 ausreichend fixiert ist. Darüber hinaus ist auch denkbar, an Stelle der Bolzen 33 zwei weitere Zapfen im rückseitigen Bereich des Funkgerätes vorzusehen und diese mit zwei weiteren Klemmstücken an den Schenkeln 2,2' festzulegen. Entscheidend für die stabile und gegen ein Verrutschen des Gerätes gesicherte Befestigung des Funkgerätes 1 an dem Halterahmen 8 ist die in den Figuren 1 bis 3 dargestellte Befestigung der Zapfen an den Schenkeln mit Hilfe der Klemmstücke.

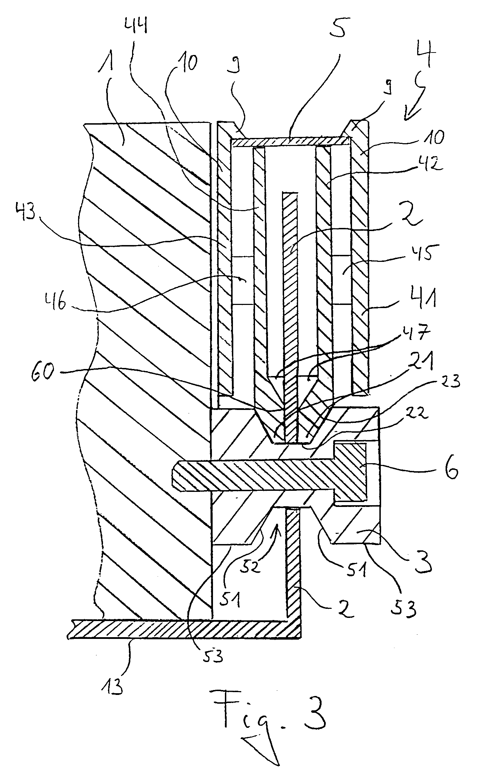

Fig. 1 zeigt eine Seitenansicht auf das von der Rückwand 7 des Halterahmens 8 abgewandte Ende des Schenkels 2 mit dem daran angeordneten Klemmstück 4. Von dem Funkgerät 1 ist der Einfachheit halber nur der Zapfen 3 dargestellt, der mit einer in axialer Richtung in den Zapfen eingesetzten Schraube 6 an dem Funkgerät befestigt ist. Das Klemmstück 4 ist als Formteil aus Kunststoff gefertigt und etwa quaderförmig mit einer Oberseite 61, einer Unterseite 62, einer Rückseite 64, einer Frontseite 63 und zwei Seitenwänden 41 und 43 ausgestaltet und mit einem L-förmigen Federbügel 5 aus Metall versehen. Wie insbesondere in Fig. 3 und Fig. 4 gut zu erkennen ist, weist das Klemmstück 4 ein erstes Seitenteil auf, das aus der Seitenwand 41 und einer damit über den Steg 45 verbundenen ersten Innenwand 42 besteht, und ein zweites Seitenteil, das aus der Seitenwand 43 und einer damit über den Steg 46 verbundenen zweiten Innenwand 44 besteht. Das erste und das zweite Seitenteil sind über einen Doppelsteg 49 im Bereich der Frontseite 63 verbunden (Fig. 4). Die beiden Innenwände 42 und 43 sind durch einen Spalt 60 voneinander beabstandet. Von der ersten Innenwand 42 steht im Bereich der Rückseite 64 des Klemmstücks ein zylinderförmiger Steg 70 in Richtung der zweiten Innenwand ab. Zur Befestigung des Klemmstücks 4 an dem Schenkel 2 können die beiden über den Doppelsteg 49 elastisch federnd verbundenen Seitenteile leicht gespreizt werden und anschließend das Klemmstück auf den Schenkel 2 derart aufgeschoben werden, daß der Schenkel 2 in den Spalt 60 des Klemmstücks eindringt, bis der zylinderförmige Steg 70 in ein in dem Schenkel 2 vorgesehenes Rundloch 30 eingreift (Fig. 1), wodurch ein Drehgelenk für das Klemmstück 4 gebildet wird. Das Klemmstück ist nun in der Richtung des in Fig. 1 gezeigten Pfeils b drehbar beziehungsweise schwenkbar an dem Schenkel 2 festgelegt. Wie in Fig. 3 und Fig. 4 erkennbar ist, dienen an den Innenwänden 42 und 44 des Klemmstücks angeformte Führungsflächen 48 und Führungsnasen 47 der Aufnahme des Schenkels 2 in dem Spalt 60 während der Drehung des Klemmstücks 4, wodurch das Klemmstück spielfrei geführt wird. Ein mit der zweiten Innenwand 44 verbundener Steg 71 (Fig. 4) preßt den Schenkel 2 gegen die erste Innenwand 42 an, so daß der umlaufende Rand des zylinderförmigen Stegs 70 sicher an der Innenwandung des Rundlochs 30 anliegt.

Beim Einschieben des Gerätes 1 in den Halterahmen 8 befindet sich das Klemmstück 4 in der in Fig. 1 gezeigten Position, in der es die Öffnung des Langlochs 31 freigibt, so daß der Zapfen 3 in Richtung des Pfeils a in das Langloch 31 eingeschoben werden kann. Der Zapfen 3 ist in dem hier gezeigten Ausführungsbeispiel über eine Schraube 6 mit dem Funkgerät 1 verbunden. Beim Einführen des Zapfens dient die abgeschrägte Stirnfläche 36 einer an dem Schenkel 2 angeformten Nase 35 als Führung für den Zapfen 3. Nach dem Einschieben des Funkgerätes in den Halterahmen wird das Klemmstück in Richtung des Pfeils b in Fig. 1 gedreht, bis der Zapfen 3 von der Unterseite 62 des Klemmstücks 4 und der unteren Längsseite des Langlochs 31 zagenartig umschlossen und dabei kraftschlüssig an dem Schenkel 2 festgelegt wird (Fig. 2). Ganz ähnlich wird bei dem in Fig. 6 gezeigten Ausführungsbeispiel verfahren, nur daß hier der Zapfen 3 zwischen dem Klemmstück 4 und dem Endabschnitt 32 des Schenkels 2 festgelegt wird. Das Klemmstück 4 wird nun bei dem in Fig. 1 und Fig. 6 gezeigten Ausführungsbeispielen in der in Fig. 2 gezeigten Position mit dem Federbügel 5 an dem Schenkel 2 arretiert, wie weiter unten noch beschrieben wird. Um die Festlegung des Zapfen 3 an dem Schenkel 2 in radialer Richtung noch zu verbessern, ist in der gegen den Zapfen 3 gepreßten Unterseite 62 des Klemmstücks ein Ausschnitt 22 mit einer den Umfang des Zapfens 3 teilweise umgreifenden C-förmigen Kontur vorgesehen. Wie in Fig. 2 dargestellt ist, greift der Zapfen 3 beim Anpressen des Klemmstücks 4 in den Ausschnitt 22 ein und ist dadurch in radialer Richtung gesichert, so daß das Funkgerät auch unter Aufbringung großer Kräfte nicht in dieser Richtung bewegt werden kann.

Um den Zapfen 3 auch in axialer Richtung in seiner Befestigungsposition zu sichern, ist vorgesehen den Zapfen 3, wie in Fig. 3 zu erkennen ist, mit einer Ringnut oder Taille 52 zu versehen. Der Zapfen 3 weist ein zylinderförmiges Mittelstück auf, das einstückig mit zwei einander zugewandten Kegelstümpfen verbunden ist, an die sich wiederum jeweils ein zylinderförmiges Endstück 53 anschließt, dessen Durchmesser größer als der Durchmesser des Mittelstückes ist. Der Zapfen 3 ist also zylindersymmetrisch in der Art einer Garn-Rolle ausgebildet. Dabei flankieren die kegelstumpfförmigen Außenflächen 51 die Taille 52.

Weiterhin ist in den Außenwände 41 und 43 des Klemmstücks 4 im Bereich der Unterseite 62 je eine rechteckförmige Ausnehmung 20 zur Aufnahme jeweils eines Endes 53 des Zapfens 3 vorgesehen (Fig. 1). Die der Unterseite 62 zugewandten Abschnitte der Innenwände 42 und 44 bilden einen in den Ausnehmungen 20 angeordneten Steg 21, der senkrecht zur Achse des Zapfens 3 verläuft. Wie in Fig. 3 gezeigt, wird der Steg durch den Spalt 60 in zwei parallel zueinander verlaufende Teilstege unterteilt. Der Steg 21 kann aber auch einstückig, ohne Spalt ausgebildet werden, falls auf das Langloch 31 zur Aufnahme des Zapfens 3, wie in Fig. 6 gezeigt, verzichtet wird.

Wie weiterhin in Fig. 3 für das erste Ausführungsbeispiel gezeigt ist, greift der Doppelsteg 21 in die Taille 52 des Zapfens 3 ein. Die Seitenflächen 23 des Doppelstegs 21 sind in einem Winkel abgeschrägt, der etwa dem Öffnungswinkel der kegelstumpfförmigen Flächenstücke 51 entspricht. Wenn der Steg 21 in die Taille 52 eingreift, legt sich eine der schrägen Seitenflächen 23 an eine der kegelstumpfförmigen Flächenstücke 51 an. Beim Anpressen des Stegs 21 an den Zapfen 3 gleitet dann das Flächenstück 51 an dieser Seitenfläche 23 entlang, während der Zapfen gleichzeitig in axialer Richtung ausgerichtet wird. Der Steg dringt so weit in die Taille ein, bis die zweite Seitenfläche des Stegs 21 die gegenüberliegende andere kegelstumpfförmigen Fläche des Zapfens berührt und die Seitenflächen des Stegs formschlüssig in die Taille eingreifen. Diese Position ist in Fig. 3 gezeigt. Der Zapfen 3 ist nun in axialer Richtung ausgerichtet und kann auch in dieser Richtung nicht mehr bewegt werden. In dem hier gezeigten Ausführungsbeispiel ist der C-förmige, den Taillenumfang des Zapfens 3 umgreifende Rand 22 in dem Steg 21 ausgebildet. Es versteht sich aber von selbst, daß die beiden Maßnahmen zur radialen und axialen Sicherung des Zapfens unabhängig voneinander realisierbar sind. Es sind also Ausführungsbeispiele denkbar, die entweder nur den Steg 21 oder nur den C-förmigen Ausschnitt 22 an der Unterseite 62 des Klemmstücks aufweisen.

Wie weiter oben bereits dargestellt wurde, wird das Klemmstück 4 über einen aus Metall gefertigten Federbügel 5 an dem Schenkel 2 des Halterahmens festgelegt. Der Federbügel 5 ist L-förmig ausgestaltet und weist einen ersten Schenkel 57 und einen zweiten Schenkel 56 auf (Fig. 1). Der erste Schenkel 57 ist auf die Oberseite 61 des Klemmstücks 4 derartig aufgesetzt, daß der zweite Schenkel 56 an der Frontseite 63 des Klemmstücks anliegt. An der Oberseite sind seitliche Stege 12a und an der Frontseite seitliche Stege 12b vorgesehen, die den Federbügel 5 beim Auflegen auf das Klemmstück zwischen sich aufnehmen. An dem der Rückseite 64 zugewandten Ende der Oberseite 61 sind zwei Nasen 11 vorgesehen, die beim Auflegen des Federbügels 5 in eine in dem ersten Schenkel 57 vorgesehene Öffnung hakenartig eingreifen. Außerdem sind in den Außenwänden 41 und 43 im Bereich der Oberseite 61 des Klemmstücks zwei elastisch federnde, fingerartige Abschnitte 10 vorgesehen, deren Enden mit Rasthaken 9 versehen sind (Fig. 3). Die Haken 9 umklammern beidseitig den Schenkel 57, so daß dieser, wie in Fig. 1 gezeigt, an der Oberseite 61 des Klemmstücks festgelegt ist. Der zweite Schenkel 56 liegt bedingt durch die Federspannkraft des Federbügels 5 an der Frontseite 63 des Klemmstücks an und steht ein Stück senkrecht von der Unterseite 62 des Klemmstücks 4 ab. In dem von der Unterseite abstehenden Abschnitt des Schenkels 56 ist eine rechteckförmige Ausnehmung 15 vorgesehen. Wie in Fig. 2 gezeigt, wird der zweite Schenkel 56 bei einer Drehung des Klemmstücks gegen den Zapfen durch eine an dem Schenkel 2 des Halterahmens vorgesehene Rastnase 35 zunächst von der Frontseite 63 des Klemmstücks weggebogen und dadurch elastisch vorgespannt. Beim Anpressen des Klemmstücks 4 gegen den Zapfen 3 gleitet der Schenkel 56 schließlich soweit über die Rastnase 35, daß diese in die Ausnehmung 15 eingreift. Der zweite Schenkel 56 des Federbügels 5 wird nun, bedingt durch die Spannkraft des Federbügels, in der durch den Pfeil c in Fig. 2 angedeuteten Richtung gegen die Frontseite 63 des Klemmstücks und den Schenkel 2 des Halterahmens gepreßt. Dabei hintergreift der untere Rand der Ausnehmung 15 eine senkrecht von dem Schenkel 2 abstehende Flanke 37 der Rastnase 35. Um das Einschnappen der Rastnase 35 in die Ausnehmung 15 zu erleichtern, ist die durch die Frontseite 63 und die Oberseite 61 des Klemmstücks gebildete Kante 27 etwas abgerundet, so daß Schenkel 57 in diesem Bereich nicht mehr an der Oberseite 61 anliegt und der Schenkel 56 auch in Richtung der Schenkelachse verschoben und in dieser Richtung vorgespannt werden kann. Durch diese Maßnahmen wird der untere Rand der Ausnehmung 15 gegen die Flanke 37 vorgespannt. Dadurch ist das Klemmstück 4 besonders sicher an dem Schenkel 2 arretiert. Der Zapfen 3 wird in dieser Position zagenartig von dem Klemmstück 4 und dem Schenkel 2 umschlossen und ist kraftschlüssig an dem Halterahmen festgelegt. Im Bedarfsfall kann das Funkgerät durch Sicherungsschrauben, welche durch in dem zweiten Schenkel 56 vorgesehene Öffnungen hindurchgeführt werden und mit der Frontseite 63 des Klemmstücks 1 verschraubt werden, in seiner Lage gesichert werden. Um das Funkgerät aus dem Halterahmen herauszunehmen, werden die oben angegebenen Schritte in umgekehrter Reihenfolge durchlaufen.

## Patentansprüche

1. Vorrichtung zur Befestigung eines Gerätes (1), insbesondere eines Funkgerätes, an einem Halterahmen (8), wobei das Gerät (1) mit wenigstens einem von einer Seitenwand (17) des Gerätes (1) abstehenden Zapfen (3) an einem senkrecht zur Achse des wenigstens einen Zapfens (3) verlaufenden Schenkel (2) des Halterahmens festlegbar ist, **dadurch gekennzeichnet,** daß wenigstens ein an dem Schenkel (2) des Halterahmens (8) drehbar gelagertes Klemmstück (4) vorgesehen ist, dessen Drehachse parallel zur Achse des Zapfens (3) verläuft, wobei das Klemmstück (4) aus einer ersten Position, in der das Gerät (1) in den Halterahmen (8) einsetzbar ist, in eine zweite Position drehbar ist, in der der wenigstens eine Zapfen (3) von Schenkel (2) und Klemmstück (4) zagenartig umschlossen und dabei kraftschlüssig festgelegt wird und wobei das Klemmstück (4) in der zweiten Position federelastisch unter Vorspannung an dem Schenkel (2) arretierbar ist.

2. Vorrichtung nach Anspruch 1, **dadurch gekennzeichnet,** daß der den Zapfen (3) gegen den Schenkel (2) pressende Teil des Klemmstücks (4) einen Ausschnitt (22) mit einer den Umfang des Zapfens (3) teilweise umgreifenden Kontur aufweist (Fig. 1, Fig. 2).

3. Vorrichtung nach Anspruch 1 oder 2, **dadurch gekennzeichnet,** daß in dem wenigstens einen Zapfen (3) eine Taille (52) vorgesehen ist und daß der gegen den Zapfen (3) gepreßte Teil des Klemmstücks (4) wenigstens einen Steg (21) aufweist, der senkrecht zur Achse des Zapfens verläuft und beim Anpressen des Klemmstücks (4) in die Taille (52) derart eingreift, daß die Flanken (51) der Taille (52) an den Seitenflächen (23) des Stegs (21) anliegen (Fig. 3).

4. Vorrichtung nach Anspruch 3, **dadurch gekennzeichnet,** daß der Zapfen (3) zylindersymmetrisch ausgebildet ist und die Taille (52) durch ein zylinderförmiges Mittelstück gebildet wird, das von zwei einander zugewandten, kegelstumpfförmigen Flächenstücken (51) flankiert ist (Fig. 3).

5. Vorrichtung nach Anspruch 4, **dadurch gekennzeichnet,** daß die Seitenflächen (23) des Stegs (21) in einem Winkel abgeschrägt sind, der etwa dem Öffnungswinkel der kegelstumpfförmigen Flächenstücke (51) des Zapfens (3) entspricht, so daß die Seitenflächen (23) formschlüssig in die Taille eingreifen.

6. Vorrichtung nach Anspruch 1, **dadurch gekennzeichnet,** daß das Gerät (1) mit einem von einer Seitenwand (17) des Gerätes abstehenden ersten Zapfen (3) an einem ersten Schenkel (2) und mit einem von einer gegenüberliegenden Seitenwand (16) des Gerätes abstehenden zweiten Zapfen (3') an einem zu dem ersten Schenkel (2) parallel verlaufendem zweiten Schenkel (2') des Halterahmens (8) befestigbar ist. (Fig. 5)

7. Vorrichtung nach Anspruch 1, **dadurch gekennzeichnet,** daß der Schenkel (2) einen als einseitig offenes Langloch ausgebildeten Schlitz (31) zur Aufnahme des Zapfens (3) aufweist (Fig. 1).

8. Vorrichtung nach Anspruch 7, **dadurch gekennzeichnet,** daß das Klemmstück (4) einen parallel zu dem Schenkel (2) des Halterahmens (8) verlaufenden Spalt (60) aufweist, durch den das Klemmstück (4) auf dem Schenkel (2) bei einer Drehung geführt wird.

9. Vorrichtung nach Anspruch 8, **dadurch gekennzeichnet,** daß das Klemmstück (4) als Grundkörper ein aus Kunststoff gefertigtes Formteil mit einem parallel zu dem Schenkel (2) verlaufenden ersten Seitenteil (41,42) und einem davon durch den Spalt (60) getrennten, ebenfalls parallel zu dem Schenkel (2) verlaufenden zweiten Seitenteil umfaßt, wobei das erste Seitenteil (41,42) mit dem zweiten Seitenteil (43,44) durch wenigstens einen elastisch federnden Verbindungssteg (49) verbunden ist (Fig. 4).

10. Vorrichtung nach Anspruch 9, **dadurch gekennzeichnet,** daß in dem Spalt (60) des Klemmstücks (4) an dem von dem Verbindungssteg (49) abgewandten Ende des Klemmstücks (4) ein von dem ersten Seitenteil (41,42) zu dem gegenüberliegenden zweiten Seitenteil (43,44) hin abstehender zylinderförmiger Vorsprung (70) vorgesehen ist, der in ein Rundloch (30) des Schenkels (2) eingreift (Fig. 4).

11. Vorrichtung nach Anspruch 1, **dadurch gekennzeichnet,** daß an dem Klemmstück (4) ein Federbügel (5) vorgesehen ist und daß der Federbügel (5) an dem Schenkel (2) mit Rastmitteln (15,35) unter Vorspannung befestigbar ist (Fig. 2).

12. Vorrichtung nach Anspruch 11, **dadurch gekennzeichnet,** daß der Federbügel (5) eine Ausnehmung (15) aufweist und daß der Schenkel (2) mit einer Rastnase (35) versehen ist, die in einer Position, in der der Zapfen (3) gegen das Klemmstück (4) und den Schenkel (2) gepreßt wird, in die Ausnehmung (15) des Federbügels einschnappt (Fig. 2).

13. Vorrichtung nach Anspruch 12, **dadurch gekennzeichnet,** daß das Klemmstück (4) in etwa quaderförmig mit einer Frontseite (63), einer Rückseite (64), einer gegen den Zapfen (3) gepreßten Unterseite (62), einer Oberseite (61) und zwei Seitenwänden (41,43) ausgebildet ist und daß der Federbügel (5) L-förmig ausgebildet ist und mit einem ersten, an der Oberseite (61) des Klemmstücks (4) festgelegten Schenkel (57) und einem zweiten, an der Frontseite (63) anliegenden und in Verlängerung der Frontseite von der Unterseite (62) abstehenden Schenkel (56) versehen ist, wobei die Ausnehmung (15) in dem abstehendem Ende des Schenkels (56) vorgesehen ist (Fig. 1).
